Europäisches Patentamt

European Patent Office

Office européen des brevets

(19)

(11) **EP 0 815 515 B1**

(12) **EUROPÄISCHE PATENTSCHRIFT**

(45) Veröffentlichungstag und Bekanntmachung des Hinweises auf die Patenterteilung:
**16.06.1999 Patentblatt 1999/24**

(21) Anmeldenummer: **96905727.2**

(22) Anmeldetag: **14.03.1996**

(51) Int Cl.6: **G06F 15/80**

(86) Internationale Anmeldenummer:
**PCT/DE96/00454**

(87) Internationale Veröffentlichungsnummer:
**WO 96/28785 (19.09.1996 Gazette 1996/42)**

(54) **VERFAHREN UND EINRICHTUNG ZUM ENTWURF EINES NEURONALEN NETZES**

METHOD AND APPARATUS FOR DESIGNING A NEURONAL NETWORK

METHODE ET APPAREIL PERMETTANT DE CONCEVOIR UN RESEAU NEURONAL

(84) Benannte Vertragsstaaten:
**AT BE CH DE ES FR GB IT LI NL SE**

(30) Priorität: **14.03.1995 DE 19509186**

(43) Veröffentlichungstag der Anmeldung:
**07.01.1998 Patentblatt 1998/02**

(73) Patentinhaber: **SIEMENS AKTIENGESELLSCHAFT**
**80333 München (DE)**

(72) Erfinder: **KIRCHBERG, Karl-Heinz**
**D-76187 Karlsruhe (DE)**

(56) Entgegenhaltungen:
**EP-A- 0 602 717        WO-A-94/06095**

• **INTERNATIONAL JOINT CONFERENCE ON NEURAL NETWORKS (IJCNN), SAN DIEGO, JUNE 17-21, 1990, Bd. VOL. 1, Nr. -, 17.Juni 1990, INSTITUTE OF ELECTRICAL AND ELECTRONICS ENGINEERS, Seiten 423-428, XP000144246 CASASENT D ET AL: "ADAPTIVE CLUSTERING NEURAL NET FOR PIECEWISE NONLINEAR DISCRIMINANT SURFACES"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren und eine Einrichtung zur Implementierung eines neuronalen Netzes nach dem Oberbegriff der Ansprüche 1 und 11.

Eine übliche Methode für die Voreinstellung der Parameter neuronaler Netze ist die Initialisierung mit Zufallszahlen und anschließende Optimierung. Diese Methode hat aber die Nachteile, daß die erhaltenen neuronalen Netze nicht reproduzierbar sind und bei stark ungleichmäßiger Datenverteilung nicht immer sinnvolle Ergebnisse liefern. Mehrfache Berechnungen der Netzparameter können daher bei gleichen Lerndaten jedesmal zu unterschiedlichen Parametersätzen führen. Die Ergebnisse sind dabei nur schwer miteinander vergleichbar. Wenn Änderungen an den Parametern auftreten, kann aufgrund der nichtreproduzierbaren Ergebnisse nicht festgestellt werden, ob die Ursache allein geänderte Lerndaten sind.

Abhilfe bietet diesbezüglich eine aus der WO 94/06095 bekannte Einrichtung zum Entwurf eines neuronalen Netzes, die für Lerndatensätze reproduzierbare Ergebnisse liefert. Die Berechnung der Parameter des neuronalen Netzes erfolgt dabei durch Lösen eines linearen Gleichungssystems. Der Entwurf kann grob in zwei Schritte unterteilt werden: Es werden zunächst auf dem Wertebereich der Eingangssignale gleichverteilte Hilfsgrößen eingeführt, mit denen die Parameter der Neuronen in der Zwischenschicht festgelegt werden, und anschließend die Parameter der Ausgangsneuronen jeweils durch Lösen eines Gleichungssystems ermittelt. Wenn als nichtlineare Elemente in den Neuronen der Zwischenschicht eine Funktion mit dem Verlauf nach Art einer Glockenkurve, welche die lokale Wirksamkeit der Neuronen gewährleistet, verwendet wird, hat die bekannte Einrichtung den Nachteil, daß sich die Zahl der in der Zwischenschicht erforderlichen Neuronen nach der Anzahl der Hilfsgrößen richtet und somit für ein neuronales Netz mit guten Interpolationseigenschaften viele Neuronen benötigt werden.

Das Dokument EP-A-0 602 717 beschreibt eine Einrichtung zum Entwurf eines neuronalen Netzes, wobei von einem Netz ausgepangen wird, das keine verdeckten Neuronen enthält. Man nimmt einen beliebigen Stützwert aus dem Datensatz und setzt ein erstes Neuron in der Zwischenschicht, dessen Aktivierungsfunktion von der Position in einem von den Achsen der Eingangssignale aufgespannten Raum entspricht. Die Aktivierungsfunktion ist derart, daß ihr Maximalwert auf dieser Position liegt und sie mit zunehmendem Abstand von dieser Position gegen Null geht. Sie definiert also quasi einen Teilraum in dem durch die Eingangssignale aufgespannten Raum. Daraufhin wird ein weiterer Stützwert genommen und geprüft, ob dieser dem Teilraum des ersten gesetzten Neurons zuzuordnen ist cder nicht. Falls sich die Lage in dem Teilraum des ersten Neurons befindet, wird für diesen Stützwert kein Neuron gesetzt und der nächste Stützwert genommen. Liegt die Position jedoch außerhalb des Teilraums, so wird ein zweites Neuron in der Zwischen schicht gesetzt. Dieser Vorgang wird fortgesetzt, bis sämtliche Stützwerte des Lerndatensatzes abgearbeitet sind. Bei einer größeren Menge von Neuronen in der Zwischenschicht wird der Rechenaufwand, der zur Überprüfung der Zugehörigkeit eines neuen Stützwertes zu bereits eingeführten Teilräumen erforderlich ist, hoch. Um diesen Effekt zu verringern, werden um die Positionen einzelner Stützwerte jeweils Gruppenräume gebildet, die mehrere Teilräume einschließen können. Bei der Überprüfung, ob ein neuer Stützwert in einem bereits geschaffenen Teilraum liegt, wird nun zunächst überprüft, ob er von einem vorhandenen Gruppenraum eingeschlossen wird, und in einem zweiten Schritt die Suche auf die Teilräume innerhalb dieser Gruppe beschränkt.

Der Erfindung liegt die Aufgabe zugrunde, ein Verfahren und eine Einrichtung zur Implementierung eines neuronalen Netzes zu schaffen, die auch mit geringerer Anzahl der Neuronen in der Zwischenschicht ein neuronales Netz mit guten Interpolationseigenschaften liefert.

Zur Lösung dieser Aufgabe weisen das neue Verfahren und die neue Einrichtung der eingangs genannten Art die in den Ansprüchen 1 und 11 angegebenen, Merkmale auf. In den abhängigen Ansprüchen 2 bis 10 und 12 bis 20 sind vorteilhafte Weiterbildungen des Verfahrens, beziehungsweise der Einrichtung beschrieben. Mit dem neuen Verfahren können nach Anspruch 11 neuartige neuronale Netze erhalten werden, deren Anzahl der Neuronen in einer Zwischenschicht optimal an die Verteilung der Lerndaten angepaßt ist. Dabei kann es sich um dreilagige Netzwerke handeln, d. h. um neuronale Netze mit einer Eingangsschicht, einer Zwischenschicht und einer Ausgangsschicht. Das Verfahren und die Einrichtung sind bei einer beliebigen Anzahl von Eingangs- und Ausgangsneuronen anwendbar. Durch die Einrichtung werden zunächst die Wertebereiche der Eingangssignale unabhängig voneinander in Teilbereiche unterteilt. Die Aufteilung erfolgt anhand der Häufigkeitsverteilung der Lerndaten, die auch als Stützwerte bezeichnet werden. Die Teilbereiche können jeweils für die Eingangssignale gleich groß gewählt werden und sollten sich nicht überschneiden. Es ist aber auch möglich, in Abschnitten hoher Häufigkeiten eine feinere Unterteilung in Teilbereiche festzulegen. Bei n Eingangssignalen ergeben die Kombinationen der einzelnen Teilbereiche n-dimensionale Teilräume der Wertebereiche. Die Lerndaten werden den Teilräumen zugeordnet. Dann werden die Teilräume nach der Anzahl der in ihnen enthaltenen Lerndaten geordnet. Der Anwender kann anhand der Lerndaten in den einzelnen Teilräumen die Güte der gewählten Aufteilung beurteilen. Ein Kriterium ist z. B., wie stark die Werte der Ausgangssignale bei Lerndaten aus demselben Teilraum auseinanderliegen. Für die weitere Verarbeitung werden die Teilräume mit den meisten Lerndaten ausgewählt. Jeder der ausgewählten Teilräume wird durch ein Neuron in einer Zwischenschicht des neuronalen Netzes repräsentiert. Durch die Auswahl der Teilräume wird somit die Anzahl der Neuronen in der Zwischenschicht festgelegt. Jeder Teilraum enthält mindestens einen Stützwert. Für jeden Eingang wird der arithmetische Mittelwert der Stützwerte des Eingangssignals berechnet. Diese Mittelwerte können dann als Offsets in den nichtlinearen Elementen der Neuronen der Zwischenschicht, die einen Verlauf nach Art einer Glockenkurve aufweisen, verwendet werden. Auf diese Weise hat das Neuron in der Mitte der Stützwerte des jeweiligen Teilraums seine maximale Wirksamkeit. Die Breite der Glockenkurven kann vom Anwender vorgegeben werden. Sie entscheidet über die Interpolationseigenschaften des neuronalen Netzes. In für den Anwender sehr anschaulicher Weise kann die Breite so festgelegt werden, daß er angeben muß, welchen Ausgangswert das nichtlineare Element am Rande des jeweiligen Teilraums noch haben soll. Üblicherweise beträgt dieser Wert 0,5, sollte aber zumindest in einem Bereich zwischen 0,1 und 0,9 liegen. Je größer der Wert ist, desto größer ist der Wirksamkeitsbereich der Glockenkurve. Die Matrix, die mit den Stützwerten und den Werten der Ausgangssignale des neuronalen Netzes aufgestellt wird, erhält näherungsweise eine Diagonalstruktur und ist somit leicht invertierbar. Die Gewichte der Neuronen in der Ausgangsschicht können beispielsweise, wie in der WO 94/06095 beschrieben, mit einer Ausgleichsrechnung berechnet werden.

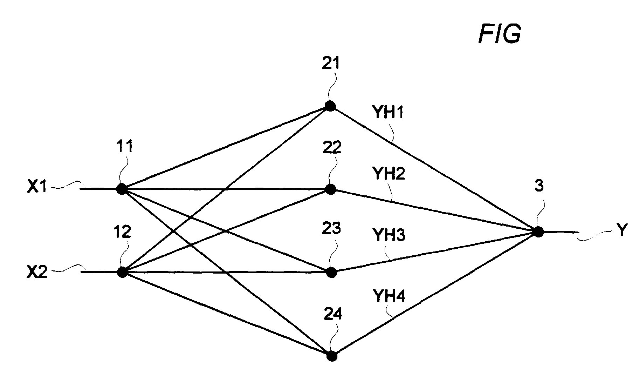

Anhand der Zeichnung, in der ein mit dem erfindungsgemäßen Verfahren und der erfindungsgemäßen Einrichtung erhältliches neuronales Netz dargestellt ist, werden im folgenden die Erfindung sowie Ausgestaltungen und Vorteile näher erläutert.

Die Figur zeigt ein dreischichtiges neuronales Netz mit zwei Eingängen X1 und X2 sowie einem Ausgang Y. Die beiden Eingänge X1 und X2 sind auf zwei Neuronen 11 bzw. 12 in der Eingangsschicht geführt. Durch diese werden auf den Eingängen X1 und X2 anliegende Signale an Neuronen 21 ... 24 in der Zwischenschicht weitergeleitet, welche die Eingangssignale verarbeiten und aus ihnen Ausgangssignale YH1 ... YH4 der Zwischenschicht erzeugen. Ein Ausgangsneuron 3 liefert daraus ein Ausgangssignal, das am Ausgang Y abgegriffen werden kann. Als Ausführungsbeispiel wurde zwar ein Netz mit drei Schichten, zwei Eingängen und einem Ausgang gewählt, die Erfindung ist aber ohne weiteres auch auf neuronale Netze mit geänderter Anzahl der Schichten, Eingänge oder Ausgänge anwendbar.

In der Zwischenschicht werden Neuronen verwendet, deren nichtlineare Elemente auf dem Wertebereich ihrer Eingangssignale eine Abbildung nach Art einer Glockenkurve liefern, welche die lokale Wirksamkeit gewährleistet. Dazu können beispielsweise Neuronen mit rbf- (Radial-Basis-Funktion) Verhalten herangezogen werden. Die Ausgangswerte yHj eines Neurons 2j mit Radial-Basis-Funktion und mehreren Eingängen Xi können angegeben werden zu:

$$yHj = \exp\left( -0.5 * \sum_{i=1}^{n} \left( Sij^2 * \left( xi - x0ij \right)^2 \right) \right)$$

In dieser Gleichung wird die Variable n für die Anzahl der Eingänge des neuronalen Netzes verwendet. Der Parameter Sij gibt die Gewichtung und x0ij den Offset zum jeweiligen Signalwert xi am Eingang Xi im Neuron 2j der Zwischenschicht an. Mit den Offsets x0ij wird die Lage des Neurons 2j, d. h. der Ort seiner lokalen Wirksamkeit, festgelegt. Je weiter die Eingangswerte xi vom jeweiligen Offset x0ij entfernt sind, desto geringer wird der Ausgangswert yHj des Neurons 2j der Zwischenschicht. Die Gewichte Sij beeinflussen die Breite der Glockenkurve für den jeweiligen Eingang Xi.

In einem rbf-Netz wird ein Ausgangssignalwert y in einem Neuron 3 der Ausgangsschicht aus den Ausgangssignalwerten yHj der Neuronen 2j der Zwischenschicht berechnet zu:

$$y = \sum_{j=1}^{p} \left( wj * yHj \right)$$

In dem Neuron 3 werden also die Ausgangssignalwerte yHj jeweils mit Ausgangsgewichten wj multipliziert und die so entstandenen Produkte aufsummiert. Weist das neuronale Netz mehrere Ausgänge auf, so können entsprechend mehrere derartige Gleichungen mit voneinander abweichenden Ausgangsgewichten aufgestellt werden. Die Variable p gibt die Anzahl der Neuronen 2j in der Zwischenschicht an.

In einem rbf1-Netz wird der Ausgangssignalwert y eines Neurons der Ausgangsschicht folgendermaßen berechnet:

$$y = \frac{\sum_{j=1}^{p}\left(wj * \kappa j * yHj\right)}{\sum_{j=1}^{p}\left(\kappa j * yHj\right)}$$

Mit den Werten der Parameter $\kappa j$ werden die Ausgangssignalwerte yHj der Neuronen 2j in der Zwischenschicht noch einmal getrennt gewichtet. rbf1-Netze haben gegenüber rbf-Netzen den Vorteil, daß sie, wenn sie mit dem im folgenden beschriebenen Verfahren entworfen werden, Ausgangssignale mit geringerer Welligkeit und damit besseren Interpolationseigenschaften liefern, da ihre Ausgangssignale bei Eingangswerten, bei denen die Glockenkurven der einzelnen nichtlinearen Elemente nur schwach wirksam sind, durch eine Division durch die Summe der Ausgangssignalwerte yHj der Neuronen 2j der Zwischenschicht, die in diesen Fällen klein wird, angehoben werden.

Eine Einrichtung, mit welcher das Entwurfsverfahren ausführbar ist, kann beispielsweise ein geeignet programmierter Rechner mit Eingabe- und Ausgabevorrichtungen sein.

Das Entwurfsverfahren geht über das sogenannte Trainieren eines neuronalen Netzes hinaus, da anhand von Stützwerten für die Eingangs- und Ausgangssignale des neuronalen Netzes nicht nur seine Parameter, sondern auch seine Strukturen beeinflußt werden. Anhand der Stützwerte wird der Wertebereich jedes Eingangssignals ermittelt und jeweils unabhängig voneinander in Teilbereiche unterteilt. Die Teilbereiche sind dabei gleich groß und überschneiden sich nicht. Lediglich zur Minimierung der Rechenzeit wird dabei zunächst eine Unterteilung in 120 Teilbereiche für jeden Wertebereich gewählt. Die in den Stützwerten enthaltenen Werte der Eingangssignale werden anschließend auf die entsprechenden Teilbereiche aufgeteilt. Die Zuordnung kann dabei nach der folgenden Formel erfolgen:

$$pos = trunc\left[ k * \frac{x - x\_min}{x\_max - x\_min} \right]$$

if pos $\geq$ k, then = k = k - 1 end

Dabei ist pos die Kennung des erhaltenen Teilbereichs für einen Wert x des Eingangssignals X, k die Anzahl der Teilbereiche für den jeweiligen Eingang, in diesem Fall 120. Die Funktion trunc entfernt vom Ergebnis des in Klammern geschriebenen Ausdrucks die Dezimalstellen, so daß für die Positionsnummer pos ein Integerwert zwischen 0 und 119 erhalten wird.

Der durch die Grenzen x_min und x_max festgelegte Wertebereich muß nicht zwangsläufig alle auftretenden Werte der Eingangssignale erfassen. Unterhalb von x_min liegende Werte liefern dann einen negativen Wert für die Positionsnummer pos. Sie können durch eine geeignete Erweiterung der Formel der Positionsnummer pos = 0 und damit dem untersten Teilbereich zugeordnet werden. Entsprechend liefern Werte des Eingangssignals x, die oberhalb von x_max liegen, nach der Formel ein Ergebnis für die Positionsnummer pos $\geq$ k, also pos $\geq$ 120, und können nach der Formel dem obersten Teilbereich mit pos = 119 zugeordnet werden. Die Zuordnung zu den Teilbereichen erfolgt für alle Stützwerte. Daraufhin wird gezählt, wie viele Stützwerte in jedem Teilbereich zu liegen kommen. Man erhält somit eine Häufigkeitsverteilung der Stützwerte für die getroffene Aufteilung.

Wie nachfolgend noch ersichtlich wird, wäre eine Aufteilung des Wertebereichs jeder Eingangsgröße in 120 Teilbereiche sehr fein und würde zu sehr großen, neuronalen Netzen führen. Der Wert 120 wird zur Minimierung der Rechenzeit gewählt, weil er das kleinste gemeinsame Vielfache von 2, 3, 4, 5, 6, 8 und 10 ist. Für den Entwurf des neuronalen Netzes ist nämlich vor allem eine Aufteilung eines Wertebereichs in weniger als zehn Teilbereiche interessant. Durch die anfängliche Wahl k = 120 wird die Rechenzeit für die folgenden Schritte verringert, da für die Ermittlung der Häufigkeitsverteilung bei größeren Teilbereichen lediglich die entsprechenden Häufigkeitswerte der Teilbereiche aus der Aufteilung mit k = 120 zusammengefaßt werden müssen. D. h., für eine Aufteilung eines Wertebereichs in zwei Teilbereiche müssen für Teilbereich 1 die Häufigkeitswerte der ersten 60 Teilbereiche (pos = 0 ... 59) und für Teilbereich 2 die Häufigkeitswerte der letzten 60 Teilbereiche (pos = 60 ... 119) summiert werden. Für Aufteilungen in drei, vier, fünf, sechs, acht oder zehn Teilbereiche kann in entsprechender Weise verfahren werden. Der Vorteil dieser Art der Berechnung liegt darin, daß man die Zuordnung der Stützwerte zu den Teilbereichen in der Aufteilung mit k = 120 nur einmal vornehmen muß. Die gröberen Aufteilungen erhält man danach einfach, indem man die entsprechenden Häufigkeitswerte dieser Aufteilung wieder zusammenfaßt.

Nun wird eine Aufteilung mit einem Wert k1 ausgewählt, der so bemessen werden sollte, daß einerseits möglichst viele Teilbereiche entstehen und andererseits die Verteilung der Stützwerte auf die Teilbereiche möglichst ungleichmäßig ist. D. h., in wenigen Teilbereichen sollen viele Stützwerte liegen und viele Teilbereiche sollen keine Stützwerte enthalten. Zudem sollte dabei berücksichtigt werden, daß bei einem Netz mit wenigen Eingängen mehr Teilbereiche eines Eingangssignals Stützwerte enthalten dürfen, damit eine vorgegebene Maximalzahl der Neuronen 2j in der Zwischenschicht nicht überschritten wird.

Bei der Aufteilung müssen keine normierten Größen verwendet werden; sie kann anhand der physikalischen Werte erfolgen. Zudem können bei der Aufteilung der Wertebereiche auch technische Aspekte mitberücksichtigt werden. Wenn beispielsweise besondere Arbeitsbereiche des Prozesses bekannt sind, kann dieses Wissen in die Wahl der Aufteilung einfließen. Auf diese Art wird für jeden Eingang getrennt eine Aufteilung ermittelt. Bei n Eingängen erhält man so k1 ... kn Werte. Aufgrund der Vielzahl der Kombinationsmöglichkeiten der einzelnen Teilbereiche ergeben sich

$$kv = k1 * k2 * ... * kn$$

n-dimensionale Teilräume. Je mehr Eingänge vorhanden sind, desto mehr Teilräume entstehen. Bei ungleichmäßiger Verteilung der Stützwerte sind aber nicht in allen Teilräumen Lerndaten enthalten, sondern es wird Teilräume geben, in denen keine Stützwerte liegen. Durch Anzeige folgender Hinweise können einem Bediener Hilfestellungen für die Festlegung der Anzahl der Teilbereiche gegeben werden:

| Bei zwei Eingängen | $k = 10 \rightarrow kv = 100$ |
| bei drei Eingängen | $k = 5 \rightarrow kv = 125$ |
| bei mehr als drei Eingängen | $k = 3 \rightarrow kv = 3^n$ |

Diese Aufteilung ist für eine grobe Übersicht ausreichend. Die gewählte Aufteilung kann übernommen werden, es ist aber auch eine andere Aufteilung wählbar.

Bei mehreren Eingängen erfolgt eine Zuordnung der Stützwerte zu den n-dimensionalen Teilräumen. Die Teilbereiche oder -räume - je nach Anzahl der Eingänge - werden nach der Anzahl der in ihnen enthaltenen Stützwerte geordnet. Dazu wird eine n-stellige Integerzahl posv gebildet, die in ihren Ziffern pos1 ... posn die jeweiligen Kennungen des Teilbereichs der einzelnen Eingangswerte eines Stützwerts enthält. Die einzelnen Ziffern werden nach der oben genannten Gleichung für pos bestimmt. Man erhält also Werte posi, die zwischen 0 und ki - 1 liegen. Bei Stützwerten, die durch n Eingangsgrößen n-dimensional festgelegt werden, weist die Integerzahl posv somit n Ziffern auf. Sie kann dargestellt werden als:

$$posv = pos1 + 10* pos2 + 100*pos3 +... 10^{n-1} * posn$$

Die Position der Ziffern gibt ihre Eingangsdimension an, der Wert der Ziffern den jeweiligen Teilbereich. Die n-stellige Zahl posv stellt die Kennung des Teilraums dar, dem ein Stützwert zugeordnet ist.

Die Kennungen posv werden für sich weiterverarbeitet. Der Wert jeder Kennung posv repräsentiert einen Teilraum, und die Anzahl der Kennungen posv entspricht der Anzahl der Stützwerte. Die Kennungen posv werden nun der Größe nach sortiert.

Dann wird ermittelt, wie häufig gleiche Kennungen vorkommen, d. h. wie viele Stützwerte jeweils im gleichen Teilraum liegen. Aus der Vielzahl der durch Kombination der einzelnen Teilbereiche erhaltenen Teilräume können nun die relevanten Teilräume ermittelt werden. Relevant sind die Teilräume, in denen Stützwerte liegen. Dazu werden die Kennungen posv nach ihrer Auftrittshäufigkeit sortiert und aufgelistet. Im neuronalen Netz wird jeder relevante Teilraum durch ein Neuron in der Zwischenschicht repräsentiert. Nun wird vorgegeben, wie viele der relevanten Teilräume auf Neuronen der Zwischenschicht abgebildet werden sollen. Wird z. B. der Wert 15 vorgegeben, dann werden die ersten 15, d. h. die 15 Teilräume mit den meisten zugeordneten Stützwerten, ausgewählt. Bei einer günstigen Aufteilung enthalten diese Teilräume etwa 90 % der Stützwerte. Durch den Wert 15 wird gleichzeitig festgelegt, wie viele Neuronen in der Zwischenschicht des neuronalen Netzwerkes vorgesehen sind.

Entstehen zu viele Teilräume mit jeweils einem oder nur wenigen Stützwerten, dann ist die Aufteilung zu fein gewählt, und der Entwurf sollte mit einer gröberen Aufteilung erneut begonnen werden.

Es werden nun die Ausgangswerte der Stützwerte, die einem relevanten Teilraum zugeordnet werden konnten, betrachtet. Interessant ist dabei, wie stark die Ausgangswerte für Stützwerte, die demselben Teilraum der Eingangswerte zugeordnet sind, auseinanderliegen. Das Neuron in der Zwischenschicht wird in dem entsprechenden Teilraum nur einen Wert nach Art eines Mittelwerts der Ausgangswerte bilden. Liegen die Ausgangswerte dicht zusammen, so ist die Aufteilung bezüglich dieses Teilraums gut gewählt. Liegen die Werte dagegen weit auseinander, so ist der Teilraum zu groß. In diesem Fall sollte der Entwurf mit einer feineren Aufteilung der Wertebereiche der Eingangssignale von neuem begonnen werden. Es gilt somit, einen Kompromiß zwischen den beiden Entwurfszielen "niedrige Anzahl erforderlicher Teilräume" und "große erzielbare Genauigkeit" zu finden. Abhilfe kann auch eine dahingehende Erweiterung des Entwurfsverfahrens bieten, daß bei der Aufteilung der Wertebereiche der Eingangssignale auch die Wertebereiche der Ausgangssignale berücksichtigt und aus den Kombinationen der Teilbereiche höherdimensionale Teilräume gebildet werden. In Teilräumen werden dann die Stützwerte zusamnengefaßt, die ähnliche Eingangswerte und ähnliche Ausgangswerte besitzen. Dies kann entweder pauschal für alle Stützwerte oder nur für die Stützwerte in den relevanten Teilräumen durchgeführt werden.

Anhand der Stützwerte in den relevanten Teilräumen werden die Offsets x0ij der Neuronen 2j der Zwischenschicht berechnet. Jeder Teilraum enthält mindestens einen Stützwert. Für jeden Eingang Xi wird der arithmetische Mittelwert der jeweiligen Eingangswerte xi aus den Stützwerten berechnet. Diese Mittelwerte werden dann als Offsets x0ij in den Neuronen 2j verwendet. Dadurch wird erreicht, daß die Wirksamkeit des Neurons 2j alle Stützwerte im jeweiligen Teilraum abdeckt. Dies wirkt sich vorteilhaft auf die Interpolationseigenschaften des neuronalen Netzes aus, da Welligkeiten aufgrund von den Offsets x0ij entferntliegender Stützwerte vermieden werden.

Nun kann die Breite der Glockenkurven durch geeignete Wahl der Parameter Sij festgelegt werden. Sie entscheidet über die Interpolationseigenschaften des neuronalen Netzes. Als Standardeinstellung kann der Parameter S so gewählt werden, daß ein Neuron, dessen Offset in der Mitte eines Teilbereichs liegt, an der Grenze des Teilbereichs, also im Abstand 1/2ki von der Mitte, einen Ausgangswert liefert, der die Hälfte des Maximalwerts beträgt. Das kann durch die folgende Formel ausgedrückt werden:

$$\exp\left(-0.5 * Sij^2 * \left(\frac{1}{2 * ki}\right)^2\right) = \frac{1}{2}$$

Für diese Standardeinstellung erhält man somit den Parameter Sij zu:

$$Sij = 2 * ki * \sqrt{2 * \ln(2)}$$

Anstelle dieser Standardeinstellung kann es in besonderen Fällen auch vorteilhaft sein, den Parameter Sij so zu wählen, daß das Neuron 2j an der Grenze des Teilbereichs einen Ausgangswert yHj = A liefert, der etwa zwischen 0,1 und 0,9 liegt. Damit können die Interpolationseigenschaften des neuronalen Netzes beeinflußt werden:

$$Sij = 2 * ki * \sqrt{2 * abs\left(\ln\left(\frac{1}{A}\right)\right)}$$

Bei einem großen Ausgangswert A wird der Verlauf des Ausgangssignals Y des neuronalen Netzes glatter. Bei Stützwerten, die nicht durch ein Neuron 2j der Zwischenschicht repräsentiert werden, ist der Fehler geringer. Bei einem kleinen Ausgangswert A ist der Verlauf kantiger, und der Fehler wird größer.

Die Ausgangsgewichte ai des Neurons 3 in der Ausgangsschicht werden mit der Ausgleichsrechnung berechnet. In einem neuronalen Netz mit mehreren Ausgängen ist jedem Ausgang ein Neuron der Ausgangsschicht zugeordnet, und die Berechnung der Ausgangsgewichte des jeweiligen Neurons erfolgt in derselben Vorgehensweise, die im folgenden für nur einen Ausgang beschrieben wird. Für die Werte yi des Ausgangssignals Y, die in den Stützwerten (xi, yi) enthalten sind, werden Gleichungen aufgestellt, in denen die Werte mij der von den Neuronen 2j der Zwischenschicht zugeführten Signale YHij jeweils mit den entsprechenden Gewichten ai multipliziert und addiert werden. Werden i als Zeilenindex und j als Spaltenindex verwendet, so erhält man ein lineares Gleichungssystem $\underline{M} * \underline{a}$ = $\underline{Y}$, dessen Matrix $\underline{M}$ näherungsweise Diagonalstruktur aufweist. Dabei erfolgt die Berechnung der Ausgangsgewichte ai für alle Stützwerte, also auch für diejenigen, die bei der Wahl der relevanten Teilräume nicht berücksichtigt worden sind. Bezüglich weiterer Einzelheiten zur Aufstellung und Lösung des Gleichungssystems wird auf die bereits genannte WO 94/06095 verwiesen.

Je größer die Ausgangswerte der Neuronen 2j an der Grenze eines Teilbereiches durch die Festlegung des Parameters S gewählt worden sind, desto größer wird die lineare Abhängigkeit der Gleichungen. Dadurch werden die berechneten Ausgangsgewichte ai größer. Je kleiner die Ausgangswerte der Neuronen gewählt werden, desto kleiner werden auch die ermittelten Ausgangsgewichte. Mit dieser Methode können die Ausgangsgewichte von rbf- und rbf1-Netzen berechnet werden. Dabei haben rbfl-Netze, wie bereits oben erwähnt, bessere Interpolationseigenschaften als rbf-Netze. Für die Berechnung des rbf1-Netzes wird der Wert 1 für alle Gewichte $\kappa i$ vorgegeben, damit die Zahl der Unbekannten des Gleichungssystems nicht unnötig steigt und das Gleichungssystem lösbar ist.

Gegebenenfalls können alle Parameter in einer anschließenden numerischen Optimierung verbessert werden. Das bisher beschriebene Entwurfsverfahren liefert günstige Startwerte für die Optimierung. Damit können Stützwerte, die außerhalb der relevanten Teilräume liegen, noch stärker mitberücksichtigt werden.

Es ist sinnvoll, bei der Optimierung der Netzparameter die Offsets der Neuronen festzuhalten. D. h., die Lage der Neuronen 2j der Zwischenschicht soll nicht verändert werden. Es sollen nur Ausgangsgewichte ai, Breiten der Glockenkurven mit den Parametern Sij und gegebenenfalls die Gewichte $\kappa i$ verändert werden.

Wenn die Lage der Neuronen verschoben wird, dann sind die Netzparameter nur noch schwer interpretierbar, da man nicht mehr weiß, welches Neuron für welchen Teilraum zuständig ist. Die Zentren der Neuronen können zudem aus dem Wertebereich der Eingangssignale herauswandern.

Der Bedienablauf eines erfindungsgemäßen Verfahrens zum Entwurf eines neuronalen Netzes kann folgendermaßen aussehen: Zum Festlegen der Teilbereiche wird von der Einrichtung die Nummer i des Eingangssignals Xi angezeigt.

Für k = 120 wird eine Tabelle mit den Häufigkeitsverteilungen auf den Teilbereichen ausgegeben und graphisch angezeigt. Der Bediener wählt einen ihm geeignet erscheinenden Wert für ki. Danach wird der nächste Eingang bearbeitet.

Nachdem die Teilbereiche aller Eingänge festgelegt sind, werden alle gewählten Werte ki ausgegeben. Weiterhin wird die daraus resultierende Anzahl der möglichen Teilräume angezeigt.

Der Anwender kann diese Einstellungen übernehmen oder von neuem mit der Festlegung der Teilbereiche beginnen Das Verfahren gibt die relevanten Teilräume in einer Tabelle mit ihren Kennungen und der Anzahl der in ihnen enthaltenen Stützwerte aus. Die Teilräume sind nach der Anzahl der Stützwerte sortiert.

Der Anwender muß eingeben, wie viele dieser Teilräume verwendet werden sollen.

Das Verfahren gibt aus, wieviel Prozent der Stützwerte in den ausgewählten Teilräumen liegen. Sind zu viele Teilräume entstanden, dann kann man von neuem beginnen und eine neue Aufteilung der Teilbereiche festlegen.

Zur Beurteilung der Güte der Teilbereiche wird eine Tabelle ausgegeben, bestehend aus der Nummer des Teilbereichs, der Anzahl der enthaltenen Stützwerte, dem Mittelwert der enthaltenen Ein- und Ausgangswerte sowie aus dem jeweiligen Minimal- und Maximalwert.

Anhand dieser Angaben kann der Anwender die Güte der Aufteilung beurteilen. Er muß diese Ausgabe quittieren oder von neuem eine Aufteilung festlegen.

In einer graphischen Anzeige sind bei zwei Eingängen X1 und X2 die Teilbereiche noch in der Ebene darstellbar. Die Teilräume entsprechen dann den Feldern in einer zweiachsigen Darstellung mit jeweils den Teilbereichen eines Eingangssignals auf den beiden Achsen.

Bei mehr als zwei Eingängen sollte eine andere Darstellung verwendet werden. Im folgenden wird ein Datensatz mit drei Eingängen (X1, X2, X3) und einem Ausgang betrachtet. Jeder Eingang wird in gleich große Teilbereiche aufgeteilt, die sich nicht überschneiden. Die Aufteilung kann für jeden Eingang unterschiedlich sein. Die Eingänge werden auf folgende Weise übereinander angeordnet:

| X3: | 111 | 112 | 113 | 121 | 122 | 123 | 131 | 132 | 133 | 211 | 212 | 213 | 221 | 222 | 223 | 231 | 232 | 233 |
|---|---|---|---|---|---|---|---|---|---|---|---|---|---|---|---|---|---|---|
| X2: | 11 | | | 12 | | | 13 | | | 21 | | | 22 | | | 23 | | |
| X1: | 1 | | | | | | | | | 2 | | | | | | | | |

Die Eingänge X1, X2 und X3 befinden sich übereinander. In der untersten Ebene ist der Eingang X1, der in zwei Teilbereiche aufgeteilt ist. Darüber liegt der Eingang X2. Dieser Eingang wurde in drei Teilbereiche aufgeteilt. Oben liegt der Eingang X3, der ebenfalls drei Teilbereiche aufweist. Die Ziffern in den Feldern sind die Kennungen der Teilbereiche. Die oberste Ebene enthält alle möglichen Teilräume, die sich aufgrund der gewählten Aufteilung ergeben. Die Stützwerte werden nun auf die Teilräume der obersten Ebene verteilt und beispielsweise durch Eintragen der Anzahl der den jeweiligen Teilräumen zugeordneten Stützwerte angezeigt. Man kann damit erkennen, wie viele Stützwerte in den einzelnen Teilräumen liegen. An dieser Häufigkeitsverteilung ist auf einfache Weise ablesbar, welche Teilräume mit Stützwerten überrepräsentiert und welche zuwenig berücksichtigt sind. Für jeden Teilraum können zudem die zugehörigen Ausgangswerte angegeben werden. An der Streuung der Ausgangswerte eines Teilraums kann man erkennen, ob der Teilraum eventuell zu groß gewählt wurde. Wenn man die Anzahl der Stützwerte in den einzelnen Teilräumen in der obersten Ebene mit Balken darstellt, dann erhält man eine Darstellung der Lerndatenverteilung wie bei einem Strichcode. Die Position der Balken legt den jeweiligen Teilraum fest, die Breite des Balkens entspricht der Anzahl der Stützwerte. Der Bediener kann nun eingeben, ob der Standardwert S = 0,5 verwendet werden soll oder der Ausgangswert eines Neurons 2j der Zwischenschicht am Rand eines Teilraums einen anderen Wert haben soll. Die weiteren Parameter des neuronalen Netzes werden dann automatisch durch die Einrichtung berechnet.

Nach Abschluß der Berechnung kann der Anwender die Güte des erhaltenen neuronalen Netzes überprüfen. Danach kann gegebenenfalls ein Optimierungsalgorithmus gestartet werden, dessen Ergebnis ebenfalls durch den Bediener überprüft werden kann.

Das neue Verfahren zum Entwurf eines neuronalen Netzes zeichnet sich also durch folgende vorteilhafte Eigenschaften aus:

Der Wertebereich, der durch die Lerndaten vorgegeben wird, wird in definierte und reproduzierbare Teilbereiche oder Teilräume unterteilt.

Anhand der Lerndaten und ihrer Verteilung auf die einzelnen Teilbereiche oder -räume kann man die Güte der gewählten Aufteilung beurteilen. Kriterien dabei sind:

1. Wie viele Teilbereiche sind entstanden,
2. wie viele Lerndaten liegen in den einzelnen Teilbereichen,
3. wie stark streuen die Eingangsdaten in den ausgewählten Teilbereichen und
4. wie stark streuen die Ausgangsdaten in den ausgewählten Teilbereichen?

Durch besondere Anzeigemechanismen erhält man einen schnellen Überblick über die Verteilung der Lerndaten.

Relevante Teilbereiche werden durch Neuronen in der Zwischenschicht repräsentiert. Es ist daher vorhersehbar, in welchen Teilbereichen das neuronale Netz besser oder schlechter arbeitet.

Das Verfahren zeichnet sich weiterhin durch eine einleuchtende und nachvollziehbare Bedienerführung aus. Es ist keine Aufteilung der Daten in Lern- und Testdaten notwendig. Auch die Güte der Lerndaten kann anhand der Aufteilung vom Bediener beurteilt werden, d. h., er kann bereits anhand der Aufteilung feststellen, ob der Datensatz zum Entwurf eines neuronalen Netzes geeignet ist. Da keine Initialisierung irgendwelcher Parameter des neuronalen Netzes mit Zufallswerten notwendig ist, sind die Ergebnisse des Netzentwurfs stets reproduzierbar. Die Interpolationseigenschaften des neuronalen Netzes werden nur durch einen Faktor beeinflußt, nämlich den Parameter S, der den Ausgangswert der Neuronen der Zwischenschicht am Rand der Teilbereiche oder -räume bestimmt. Bei der Aufteilung der Wertebereiche der Eingangssignale kann zudem Anwenderwissen über die Herkunft der Lerndaten oder die Zweckbestimmung des neuronalen Netzes mit berücksichtigt werden.

**Patentansprüche**

1.  Verfahren Einrichtung zur Implementierung eines neuronalen Netzes, das mindestens einen Eingang (X1, X2) und mindestens einen Ausgang (Y) sowie Neuronen in mehreren hintereinander angeordneten Schichten aufweist, wobei in den Neuronen (21 ... 24) einer Zwischenschicht Eingangssignale gewichtet, miteinander verknüpft und mit einem nichtlinearen Element nach Art einer Glockenkurve, die vorwiegend lokal auf dem Wertebereich der Eingangssignale wirksam ist, ein Ausgangssignal (YH1 ... YH4) gebildet wird und jedem Ausgang (Y) des neuronalen Netzes ein Ausgangsneuron (3) in der Ausgangsschicht zugeordnet ist, auf welches die Ausgangssignale (YH1 ... YH4) der Neuronen (21 ... 24) der vorhergehenden Zwischenschicht geführt sind und in denen durch eine Gewichtung und Verknüpfung dieser Signale jeweils ein Ausgangssignal (Y) erzeugt wird, bei welcher Stützwerte (xi, yi) für die Eingangs- und Ausgangssignale zum Trainieren des neuronalen Netzes vorgebbar sind und der Wertebereich des jeweiligen Eingangssignals ermittelt wird, **dadurch gekennzeichnet,**

    - daß zur Bestimmung der Anzahl der Neuronen in der Zwischenschicht der Wertebereich des jeweiligen Eingangssignals in eine vorgebbare Anzahl von Teilbereichen unterteilt wird,
    - daß im Falle einer Mehrzahl n von Eingangssignalen der n-dimensionale Werteraum der n Eingangssignale den jeweiligen Teilbereichen entsprechend in n-dimensionale Teilräume unterteilt wird,
    - daß die Stützwerte den Teilbereichen oder -räumen zugeordnet und die Teilbereiche oder -räume mit den meisten Stützwerten ausgewählt werden und

- daß für jeden ausgewählten Teilbereich oder -raum ein Neuron (21 ... 24) in der der Ausgangsschicht vorhergehenden Zwischenschicht vorgesehen wird.

2. Verfahren nach Anspruch 1, **dadurch gekennzeichnet,**

- daß die zur Bildung des Ausgangssignals Y aus den Ausgangssignalen der Neuronen der vorhergehenden Schicht in einem Neuron notwendigen Gewichte ai durch Lösen eines linearen Gleichungssystems $\underline{M} \, {}^{*}\underline{a} = \underline{Y}$ ermittelt werden, das aus Gleichungen für die Ausgangssignalwerte yi der Stützwerte (xi, yi) besteht, in denen die Werte mij der von den Neuronen (2j) der vorhergehenden Schicht zugeführten Signale (YHij) mit i - Zeilenindex, j - Spaltenindex jeweils mit den entsprechenden Gewichten ai multipliziert und addiert werden.

3. Verfahren nach Anspruch 1, **dadurch gekennzeichnet,**

- daß in den Neuronen in der Ausgangsschicht die Ausgangssignale (YHij) der Neuronen der vorhergehenden Zwischenschicht als Verknüpfung zur Erzeugung jeweils eines Ausgangssignals Y addiert und durch die Summe der Ausgangssignale YHij der Neuronen (2j) der vorhergehenden Zwischenschicht dividiert werden und
- daß die zur Bildung des Ausgangssignals Y aus den Ausgangssignalen YHij der Neuronen 2j der vorhergehenden Schicht in einem Neuron (3) notwendigen Gewichte ai durch Lösen eines Gleichungssystems ermittelt werden, das aus Gleichungen für die mit der jeweiligen Summe der Werte mij der von den Neuronen (2j) der vorhergehenden Schicht zugeführten Signale (YHij) multiplizierten Ausgangssignalwerte yi der Stützwerte (xi, yi) besteht, in denen die Werte mij der von den Neuronen (2j) der vorhergehenden Schicht zugeführten Signale (YHij) mit i - Zeilenindex, j - Spaltenindex jeweils mit den entsprechenden Gewichten ai multipliziert und addiert werden.

4. Verfahren nach einem der vorhergehenden Ansprüche, **dadurch gekennzeichnet,**

- daß Offsets (x0ij) der Neuronen (2j) in der Zwischenschicht, die den Ort der maximalen Wirksamkeit ihres nichtlinearen Elements bestimmen, als arithmetischer Mittelwert der Eingangssignalwerte der im jeweiligen Teilbereich oder Teilraum liegenden Stützwerte (xi, yi) gewählt werden.

5. Verfahren nach einem der vorhergehenden Ansprüche, **dadurch gekennzeichnet,**

- daß die Anzahl der Teilbereiche auf einem Wertebereich größer gewählt wird, wenn die Ausgangssignalwerte für Eingangssignalwerte aus demselben Teilbereich oder -raum weit auseinanderliegen.

6. Verfahren nach einem der vorhergehenden Ansprüche, **dadurch gekennzeichnet,**

- daß der Wertebereich des jeweiligen Ausgangssignals in eine vorgegebene Anzahl von Teilbereichen unterteilt wird und
- daß nur Stützwerte gleichen Teilbereichen oder -räumen der Eingangssignale zugeordnet werden, deren Ausgangssignalwerte in denselben oder zumindest benachbarten Teilbereichen liegen.

7. Verfahren nach einem der vorhergehenden Ansprüche, **dadurch gekennzeichnet,**

- daß die Verteilung der Stützwerte auf den Teilbereichen oder -räumen optisch angezeigt wird.

8. Verfahren nach Anspruch 7, **dadurch gekennzeichnet,**

- daß die Verteilung der Stützwerte auf den Teilbereichen oder -räumen als Strichcode angezeigt wird, in welchem für jeden Teilbereich oder -raum ein Strich vorgesehen ist, dessen Stärke oder Länge die Zahl der zugeordneten Stützwerte repräsentiert.

9. Verfahren nach einem der vorhergehenden Ansprüche, **dadurch gekennzeichnet,**

- daß die Teilbereiche oder Teilräume gleich groß sind.

10. Verfahren nach einem der vorhergehenden Ansprüche, **dadurch gekennzeichnet,**

- daß die Breite der Glockenkurven vom Anwender wählbar ist.

11. Einrichtung zur Implementierung eines neuronalen Netzes, das mindestens einen Eingang (X1, X2) und mindestens einen Ausgang (Y) sowie Neuronen in mehreren hintereinander angeordneten Schichten aufweist, wobei in den Neuronen (21 ... 24) einer Zwischenschicht Eingangssignale gewichtet, miteinander verknüpft und mit einem nichtlinearen Element nach Art einer Glockenkurve, die vorwiegend lokal auf dem Wertebereich der Eingangssignale wirksam ist, ein Ausgangssignal (YH1 ... YH4) gebildet wird und jedem Ausgang (Y) des neuronalen Netzes ein Ausgangsneuron (3) in der Ausgangsschicht zugeordnet ist, auf welches die Ausgangssignale (YH1 ... YH4) der Neuronen (21 ... 24) der vorhergehenden Zwischenschicht geführt sind und in denen durch eine Gewichtung und Verknüpfung dieser Signale jeweils ein Ausgangssignal (Y) erzeugt wird,
bei welcher Stützwerte (xi, yi) für die Eingangs- und Ausgangssignale zum Trainieren des neuronalen Netzes vorgebbar sind und der Wertebereich des jeweiligen Eingangssignals ermittelt wird,
**dadurch gekennzeichnet,**

- daß zur Bestimmung der Anzahl der Neuronen in der Zwischenschicht Mittel vorgesehen sind, den Wertebereich des jeweiligen Eingangssignals in eine vorgebbare Anzahl von Teilbereichen zu unterteilen,
- daß im Falle einer Mehrzahl n von Eingangssignalen Mittel, um den n-dimensionalen Werteraum der n Eingangssignale den jeweiligen Teilbereichen entsprechend in n-dimensionale Teilräume zu unterteilen, vorgesehen sind,
- daß die Mittel, um Stützwerte den Teilbereichen oder -räumen zu zuordnen und die Teilbereiche oder -räume mit den meisten Stützwerten aus zu wählen, vorgesehen sind, und
- daß Mittel, um für jeden ausgewählten Teilbereich oder -raum ein Neuron (21 ... 24) in der der Ausgangsschicht vorhergehenden Zwischenschicht zu versehen, vorgesehen sind,

12. Einrichtung nach Anspruch 11, **dadurch gekennzeichnet,**

- daß Mittel, um die zur Bildung des Ausgangssignals Y aus den Ausgangssignalen der Neuronen der vorhergehenden Schicht in einem Neuron notwendigen Gewichte ai durch Lösen eines linearen Gleichungssystems $\underline{M} \, {}^*\underline{a} = \underline{Y}$ zu ermitteln, vorgesehen sind, das aus Gleichungen für die Ausgangssignalwerte yi der Stützwerte (xi, yi) besteht, in denen die Werte mij der von den Neuronen (2j) der vorhergehenden Schicht zugeführten Signale (YHij) mit i - Zeilenindex, j - Spaltenindex jeweils mit den entsprechenden Gewichten ai multipliziert und addiert werden.

13. Einrichtung nach Anspruch 11, **dadurch gekennzeichnet,**

- daß Mittel, um in den Neuronen in der Ausgangsschicht die Ausgangssignale (YHij) der Neuronen der vorhergehenden Zwischenschicht als Verknüpfung zur Erzeugung jeweils eines Ausgangssignals Y zu addieren und durch die Summe der Ausgangssignale YHij der Neuronen (2j) der vorhergehenden Zwischenschicht zu dividieren, vorgesehen sind, und
- daß Mittel, um die zur Bildung des Ausgangssignals Y aus den Ausgangssignalen YHij der Neuronen 2j der vorhergehenden Schicht in einem Neuron (3) notwendigen Gewichte ai durch Lösen eines Gleichungssystems zu ermitteln, vorgesehen sind, das aus Gleichungen für die mit der jeweiligen Summe der Werte mij der von den Neuronen (2j) der vorhergehenden Schicht zugeführten Signale (YHij) multiplizierten Ausgangssignalwerte yi der Stützwerte (xi, yi) besteht, in denen die Werte mij der von den Neuronen (2j) der vorhergehenden Schicht zugeführten Signale (YHij) mit i - Zeilenindex, j - Spaltenindex jeweils mit den entsprechenden Gewichten ai multipliziert und addiert werden.

14. Einrichtung nach einem der Ansprüchen 11-13, **dadurch gekennzeichnet,**

- daß Mittel, um Offsets (x0ij) der Neuronen (2j) in der Zwischenschicht, die den Ort der maximalen Wirksamkeit ihres nichtlinearen Elements bestimmen, als arithmetischer Mittelwert der Eingangssignalwerte der im jeweiligen Teilbereich oder Teilraum liegenden Stützwerte (xi, yi) zu wählen, vorgesehen sind.

15. Einrichtung nach einem der Ansprüche 11-14, **da durch gekennzeichnet,**

- daß Mittel, um die Anzahl der Teilbereiche auf einem Wertebereich größer zu wählen, vorgesehen sind, wenn die Ausgangssignalwerte für Eingangssignalwerte aus demselben Teilbereich oder -raum weit auseinanderliegen.

**16.** Einrichtung nach einem der Ansprüche 11-15, **dadurch gekennzeichnet,**

- daß Mittel, um den Wertebereich des jeweiligen Ausgangssignals in eine vorgegebene Anzahl von Teilbereichen zu unterleiten, vorgesehen sind, und
- daß Mittel, um nur Stützwerte gleichen Teilbereichen oder -räumen der Eingangssignale zu zuordnen, vorgesehen sind, deren Ausgangssignalwerte in denselben oder zumindest benachbarten Teilbereichen liegen.

**17.** Einrichtung nach einem der Ansprüche 11-16, **dadurch gekennzeichnet,**

- daß Mittel, um die Verteilung der Stützwerte auf den Teilbereichen oder -räumen optisch anzuzeigen, vorgesehen sind.

**18.** Einrichtung nach Anspruch 17, **dadurch gekennzeichnet,**

- daß Mittel, um die Verteilung der Stützwerte auf den Teilbereichen oder -räumen als Strichcode anzuzeigen, vorgesehen sind, in welchem für jeden Teilbereich oder -raum ein Strich vorgesehen ist, dessen Stärke oder Länge die Zahl der zugeordneten Stützwerte repräsentiert.

**19.** Einrichtung nach einem der Ansprüche 11-18, **dadurch gekennzeichnet,**

- daß die Teilbereiche oder Teilräume gleich groß sind.

**20.** Einrichtung nach einem der Ansprüche 11-19, **dadurch gekennzeichnet,**

- daß die Breite der Glockenkurven vom Anwender wählbar ist.

**Claims**

1. Method for implementing a neuronal network which has at least one input (X1, X2) and at least one output (Y) as well as neurons in several layers arranged in series, wherein in the neurons (21 ... 24) of an intermediate layer input signals are weighted, combined with each other and with a non-linear element of the type of a bell curve, which is mainly locally effective on the value range of the input signals, an output signal (YH1 ... YH4) is formed and each output (Y) of the neuronal network is allocated an output neuron (3) in the output layer, to which output neuron the output signals (YH1 ... YH4) of the neurons (21 ... 24) of the preceding intermediate layer are guided and in which, by means of a weighting and combination of these signals, a respective output signal (Y) is generated, with which supporting values (xi, yi) for the input signals and output signals can be specified for training the neuronal network, and the value range of the respective input signal is determined,
characterized in that

- to determine the number of the neurons in the intermediate layer the value range of the respective input signal is subdivided into a specifiable number of partial regions,
- in the case of a majority n of input signals the n-dimensional value area of the n input signals is subdivided into n-dimensional partial areas corresponding to the respective partial regions,
- the supporting values are allocated to the partial regions or partial areas and the partial regions or partial areas with the most supporting values are selected, and
- for each selected partial region or partial area a neuron (21 ... 24) in the intermediate layer preceding the output layer is provided.

2. Method according to claim 1, characterized in that

- the weights ai necessary in a neuron for forming the output signal Y from the output signals of the neurons of the preceding layer are determined by solving a linear system of equations $\underline{M} * \underline{a} = \underline{Y}$ which consists of equations for the output signal values yi of the supporting values (xi, yi) in which the values mij of the signals (YHij) supplied by the neurons (2j) of the preceding layer, with i - line index, j - column index, are respectively multiplied by the corresponding weights ai and added.

3. Method according to claim 1, characterized in that

- in the neurons in the output layer the output signals (YHij) of the neurons of the preceding intermediate layer are added as combination to generate a respective output signal Y and are divided by the sum of the output signals YHij of the neurons (2j) of the preceding intermediate layer, and
- the weights ai necessary in a neuron (3) for forming the output signal Y from the output signals YHij of the neurons 2j of the preceding layer are determined by solving a system of equations which consists of equations for the output signal values yi of the supporting values (xi, yi) multiplied by the respective sum of the values mij of the signals (YHij) supplied by the neurons (2j) of the preceding layer, in which equations the values mij of the signals (YHij) supplied by the neurons (2j) of the preceding layer, with i - line index, j - column index, are respectively multiplied by the corresponding weights ai and added.

4. Method according to one of the preceding claims, characterized in that

- offsets (x0ij) of the neurons (2j) in the intermediate layer, which determine the location of the maximum effectiveness of their non-linear element, are selected as arithmetic mean value of the input signal values of the supporting values (xi, yi) lying in the respective partial region or partial area.

5. Method according to one of the preceding claims, characterized in that

- the number of the partial regions on a value range is selected to be larger if the output signal values for input signal values from the same partial region or partial area lie far apart.

6. Method according to one of the preceding claims, characterized in that

- the value range of the respective output signal is subdivided into a specified number of partial regions, and
- only supporting values, the output signal values of which lie in the same or at least adjacent partial regions, are allocated to the same partial regions or partial areas of the input signals.

7. Method according to one of the preceding claims, characterized in that

- the distribution of the supporting values among the partial regions or partial areas is displayed optically.

8. Method according to claim 7, characterized in that

- the distribution of the supporting values among the partial regions or partial areas is displayed as a bar code in which a bar is provided for each partial region or partial area, the thickness or length of which bar represents the number of allocated supporting values.

9. Method according to one of the preceding claims, characterized in that the partial regions or partial areas are of the same size.

10. Method according to one of the preceding claims, characterized in that the width of the bell curves can be selected by the user.

11. Device for implementing a neuronal network which has at least one input (X1, X2) and at least one output (Y) as well as neurons in several layers arranged in series, wherein in the neurons (21 ... 24) of an intermediate layer input signals are weighted, combined with each other and with a non-linear element of the type of a bell curve, which is mainly locally effective on the value range of the input signals, an output signal (YH1 ... YH4) is formed and each output (Y) of the neuronal network is allocated an output neuron (3) in the output layer, to which output neuron the output signals (YH1 ... YH4) of the neurons (21 ... 24) of the preceding intermediate layer are guided and in which, by means of a weighting and combination of these signals, a respective output signal (Y) is generated, with which supporting values (xi, yi) for the input signals and output signals can be specified for training the neuronal network, and the value range of the respective input signal is determined, characterized in that

- to determine the number of the neurons in the intermediate layer, means are provided to subdivide the value range of the respective input signal into a specifiable number of partial regions,
- in the case of a majority n of input signals, means are provided to subdivide the n-dimensional value area of the n input signals into n-dimensional partial areas corresponding to the respective partial regions,

- means are provided to allocate the supporting values to the partial regions or partial areas and to select the partial regions or partial areas with the most supporting values, and
- means are provided to provide for each selected partial region or partial area a neuron (21 ... 24) in the intermediate layer preceding the output layer.

12. Device according to claim 11, characterized in that

- means are provided to determine the weights ai, necessary in a neuron for forming the output signal Y from the output signals of the neurons of the preceding layer, by solving a linear system of equations $\underline{M} *\underline{a} = \underline{Y}$ which consists of equations for the output signal values yi of the supporting values (xi, yi) in which the values mij of the signals (YHij) supplied by the neurons (2j) of the preceding layer, with i - line index, j - column index, are respectively multiplied by the corresponding weights ai and added.

13. Device according to claim 11, characterized in that

- means are provided to add in the neurons in the output layer the output signals (YHij) of the neurons of the preceding intermediate layer as combination to generate a respective output signal Y, and to divide them by the sum of the output signals YHij of the neurons (2j) of the preceding intermediate layer, and
- means are provided to determine the weights ai, necessary in a neuron (3) for forming the output signal Y from the output signals YHij of the neurons 2j of the preceding layer, by solving a system of equations which consists of equations for the output signal values yi of the supporting values (xi, yi) multiplied by the respective sum of the values mij of the signals (YHij) supplied by the neurons (2j) of the preceding layer, in which equations the values mij of the signals (YHij) supplied by the neurons (2j) of the preceding layer, with i - line index, j - column index, are respectively multiplied by the corresponding weights ai and added.

14. Device according to one of claims 11-13, characterized in that

- means are provided to select offsets (x0ij) of the neurons (2j) in the intermediate layer, which determine the location of the maximum effectiveness of their non-linear element, as arithmetic mean value of the input signal values of the supporting values (xi, yi) lying in the respective partial region or partial area.

15. Device according to one of claims 11-14, characterized in that

- means are provided to select the number of the partial regions on a value range to be larger if the output signal values for input signal values from the same partial region or partial area lie far apart.

16. Device according to one of claims 11-15, characterized in that

- means are provided to subdivide the value range of the respective output signal into a specified number of partial regions, and
- means are provided to allocate only supporting values, the output signal values of which lie in the same or at least adjacent partial regions, to the same partial regions or partial areas of the input signals.

17. Device according to one of claims 11-16, characterized in that

- means are provided to optically display the distribution of the supporting values among the partial regions or partial areas.

18. Device according to claim 17, characterized in that

- means are provided to display the distribution of the supporting values among the partial regions or partial areas as a bar code in which a bar is provided for each partial region or partial area, the thickness or length of which bar represents the number of allocated supporting values.

19. Device according to one of claims 11-18, characterized in that the partial regions or partial areas are of the same size.

20. Device according to one of claims 11-19, characterized in that the width of the bell curves can be selected by the user.

**Revendications**

1. Procédé pour la mise en oeuvre d'un réseau neuronal comportant au moins une entrée (X1, X2) et au moins une sortie (Y) ainsi que des neurones dans plusieurs couches agencées les unes derrière les autres, dans lequel, dans les neurones (21 à 24) d'une couche intermédiaire, on pondère des signaux d'entrée, on les combine entre eux et, avec un élément non linéaire, semblable à une courbe en cloche qui est surtout efficace localement sur le domaine de valeurs des signaux d'entrée, on forme un signal de sortie (YH1 à YH4), dans lequel on associe à chaque sortie (Y) du réseau neuronal un neurone de sortie (3) de la couche de sortie, lesquels neurones de sortie reçoivent les signaux de sortie (YH1 à YH4) des neurones (21 à 24) de la couche intermédiaire précédente et produisent par pondération et combinaison de ces signaux à chaque fois un signal de sortie (Y),

   dans lequel on peut prescrire des valeurs de référence (xi, yi) pour les signaux d'entrée et pour les signaux de sortie afin d'effectuer l'apprentissage du réseau neuronal et on détermine le domaine de valeurs du signal d'entrée considéré,

   caractérisé par le fait que

   - pour déterminer le nombre des neurones de la couche intermédiaire, on divise le domaine de valeurs du signal d'entrée considéré en un nombre, pouvant être prescrit, de sous-domaines,
   - dans le cas d'une multiplicité n de signaux d'entrée, on divise l'espace de valeurs de dimension n des n signaux d'entrée, en fonction des sous-domaines considérés, en sous-espaces de dimension n,
   - on associe les valeurs de référence aux sous-domaines ou sous-espaces et on choisit les sous-domaines ou sous-espaces ayant le plus grand nombre de valeurs de référence et
   - pour chaque sous-domaine ou sous-espace choisi, on prévoit un neurone (21 à 24) dans la couche intermédiaire précédant la couche de sortie.

2. Procédé selon la revendication 1, caractérisé par le fait que

   - on détermine les poids ai, nécessaires dans un neurone à la formation du signal de sortie Y à partir des signaux de sortie des neurones de la couche précédente, en résolvant un système d'équations linéaire $\underline{M} * \underline{a} = \underline{Y}$ constitué d'équations qui se rapportent aux valeurs de signaux de sortie yi des valeurs de référence (xi, yi) et dans lesquelles les valeurs mij des signaux (YHij) envoyés par les neurones (2j) de la couche précédente - avec i comme indice de ligne et j comme indice de colonne - sont multipliées à chaque fois par les poids ai correspondants et sont additionnées.

3. Procédé selon la revendication 1, caractérisé par le fait que

   - dans les neurones dans la couche de sortie, on additionne les signaux de sortie (YHij) des neurones de la couche intermédiaire précédente comme combinaison pour produire à chaque fois un signal de sortie Y et on les divise par la somme des signaux de sortie YHij des neurones (2j) de la couche intermédiaire précédente, et
   - on détermine les poids ai, nécessaires dans un neurone (3) à la formation du signal de sortie Y à partir des signaux de sortie YHij des neurones 2j de la couche précédente, en résolvant un système d'équations constitué d'équations qui se rapportent aux valeurs de signaux de sortie yi - des valeurs de référence (xi, yi) - multipliées par la somme respective des valeurs mij des signaux (YHij) envoyés par les neurones (2j) de la couche précédente et dans lesquelles les valeurs mij des signaux (YHij) envoyés par les neurones (2j) de la couche précédente - avec i comme indice de ligne et j comme indice de colonne - sont multipliées à chaque fois par les poids ai correspondants et sont additionnées.

4. Procédé selon l'une des revendications précédentes, caractérisé par le fait que

   - on choisit des offsets (x0ij) des neurones (2j) de la couche intermédiaire, lesquels offsets déterminent le lieu de l'efficacité maximale de leur élément non linéaire, comme moyenne arithmétique des valeurs de signaux d'entrée des valeurs de référence (xi, yi) se trouvant dans le sous-domaine ou sous-espace considéré.

5. Procédé selon l'une des revendications précédentes, caractérisé par le fait que

- on choisit un nombre plus grand de sous-domaines sur un domaine de valeurs si les valeurs de signaux de sortie pour des valeurs de signaux d'entrée provenant du même sous-domaine ou sous-espace sont très éloignées les unes des autres.

6. Procédé selon l'une des revendications précédentes, caractérisé par le fait que

- on divise le domaine de valeurs du signal de sortie considéré en un nombre prescrit de sous-domaines et
- on n'associe à des sous-domaines ou sous-espaces identiques des signaux d'entrée que des valeurs de référence, dont les valeurs de signaux de sortie se trouvent dans des sous-domaines identiques ou au moins voisins.

7. Procédé selon l'une des revendications précédentes, caractérisé par le fait que

- on représente visuellement la distribution des valeurs de référence sur les sous-domaines ou sous-espaces.

8. Procédé selon la revendication 7, caractérisé par le fait que

- on représente la distribution des valeurs de référence sur les sous-domaines ou sous-espaces sous forme de code barres dans lequel on prévoit pour chaque sous-domaine ou sous-espace une barre dont l'épaisseur ou la longueur représente le nombre des valeurs de référence associées.

9. Procédé selon l'une des revendications précédentes, caractérisé par le fait que

- les sous-domaines ou sous-espaces sont de grandeur identique.

10. Procédé selon l'une des revendications précédentes, caractérisé par le fait que

- l'utilisateur peut choisir la largeur des courbes en cloche.

11. Dispositif pour la mise en oeuvre d'un réseau neuronal comportant au moins une entrée (X1, X2) et au moins une sortie (Y), ainsi que des neurones dans plusieurs couches agencées les unes derrière les autres,

dans lequel, dans les neurones (21 à 24) d'une couche intermédiaire, des signaux d'entrée sont pondérés, combinés entre eux et, avec un élément non linéaire semblable à une courbe en cloche qui est surtout efficace localement sur le domaine de valeurs des signaux d'entrée, un signal de sortie (YH1 à YH4) est formé, dans lequel un neurone de sortie (3) est associé à chaque sortie (Y) du réseau neuronal de la couche de sortie, lesquels neurones de sortie reçoivent les signaux de sortie (YH1 à YH4) des neurones (21 à 24) de la couche intermédiaire précédente et produisent par pondération et combinaison de ces signaux à chaque fois un signal de sortie (Y),
dans lequel des valeurs de référence (xi, yi) peuvent être prescrites pour les signaux d'entrée et pour les signaux de sortie afin d'effectuer l'apprentissage du réseau neuronal et le domaine de valeurs du signal d'entrée considéré est déterminé,

caractérisé par le fait que

- pour déterminer le nombre des neurones de la couche intermédiaire, il est prévu des moyens pour diviser le domaine de valeurs du signal d'entrée considéré en un nombre, pouvant être prescrit, de sous-domaines,
- dans le cas d'une multiplicité n de signaux d'entrée, il est prévu des moyens pour diviser l'espace de valeurs de dimension n des n signaux d'entrée, en fonction des sous-domaines considérés, en sous-espaces de dimension n,
- il est prévu des moyens pour associer les valeurs de référence aux sous-domaines ou sous-espaces et pour choisir les sous-domaines ou sous-espaces ayant le plus grand nombre de valeurs de référence et
- il est prévu des moyens pour munir chaque sous-domaine ou sous-espace choisi d'un neurone (21 à 24) dans la couche intermédiaire précédant la couche de sortie.

12. Dispositif selon la revendication 11, caractérisé par le fait que

- il est prévu des moyens pour déterminer les poids ai, nécessaires dans un neurone à la formation du signal de sortie Y à partir des signaux de sortie des neurones de la couche précédente, par la résolution d'un système d'équations linéaire $\underline{M} * \underline{a} = \underline{Y}$ constitué d'équations qui se rapportent aux valeurs de signaux de sortie yi des valeurs de référence (xi, yi) et dans lesquelles les valeurs mij des signaux (YHij) envoyés par les neurones (2j) de la couche précédente - avec i comme indice de ligne et j comme indice de colonne - sont multipliées à chaque fois par les poids ai correspondants et sont additionnées.

**13.** Dispositif selon la revendication 11, caractérisé par le fait que

- il est prévu des moyens pour, dans les neurones de la couche de sortie, additionner les signaux de sortie (YHij) des neurones de la couche intermédiaire précédente comme combinaison pour produire à chaque fois un signal de sortie Y et pour les diviser par la somme des signaux de sortie YHij des neurones (2j) de la couche intermédiaire précédente,
- il est prévu des moyens pour déterminer les poids ai, nécessaires dans un neurone (3) à la formation du signal de sortie Y à partir des signaux de sortie YHij des neurones 2j de la couche précédente, par la résolution d'un système d'équations constitué d'équations qui se rapportent aux valeurs de signaux de sortie yi - des valeurs de référence (xi, yi) - multipliées par la somme respective des valeurs mij des signaux (YHij) envoyés par les neurones (2j) de la couche précédente et dans lesquelles les valeurs mij des signaux (YHij) envoyés par les neurones (2j) de la couche précédente - avec i comme indice de ligne et j comme indice de colonne - sont multipliées à chaque fois par les poids ai correspondants et sont additionnées.

**14.** Dispositif selon l'une des revendications 11 à 13, caractérisé par le fait que

- il est prévu des moyens pour choisir des offsets (x0ij) des neurones (2j) dans la couche intermédiaire, lesquels offsets déterminent le lieu de l'efficacité maximale de leur élément non linéaire, comme moyenne arithmétique des valeurs de signaux d'entrée des valeurs de référence (xi, yi) se trouvant dans le sous-domaine ou sous-espace considéré.

**15.** Dispositif selon l'une des revendications 11 à 14, caractérisé par le fait que

- il est prévu des moyens pour choisir un nombre plus grand de sous-domaines sur un domaine de valeurs si les valeurs de signaux de sortie pour des valeurs de signaux d'entrée provenant du même sous-domaine ou sous-espace sont très éloignées les unes des autres.

**16.** Dispositif selon l'une des revendications 11 à 15, caractérisé par le fait que

- il est prévu des moyens pour diviser le domaine de valeurs du signal de sortie considéré en un nombre prescrit de sous-domaines et
- il est prévu des moyens pour n'associer à des sous-domaines ou sous-espaces identiques des signaux d'entrée que des valeurs de référence dont les valeurs de signaux de sortie se trouvent dans des sous-domaines identiques ou au moins voisins.

**17.** Dispositif selon l'une des revendications 11 à 16, caractérisé par le fait que

- il est prévu des moyens pour représenter visuellement la distribution des valeurs de référence sur les sous-domaines ou sous-espaces.

**18.** Dispositif selon la revendication 17, caractérisé par le fait que

- il est prévu des moyens pour représenter la distribution des valeurs de référence sur les sous-domaines ou sous-espaces sous forme de code barres dans lequel il est prévu pour chaque sous-domaine ou sous-espace une barre dont l'épaisseur ou la longueur représente le nombre des valeurs de référence associées.

**19.** Dispositif selon l'une des revendications 11 à 18, caractérisé par le fait que

- les sous-domaines ou sous-espaces sont de grandeur identique.

**20.** Dispositif selon l'une des revendications 11 à 19, caractérisé par le fait que

- l'utilisateur peut choisir la largeur des courbes en cloche.

FIG